# EUROPEAN PATENT SPECIFICATION

(11) **EP 1 401 940 B1**
(45) Date of publication and mention of the grant of the patent: **13.08.2008**
(21) Application number: 02735288.9
(22) Date of filing: 23.04.2002
(51) Int. Cl.: C08K 5/134, C08K 5/3492, C08L 59/00

(54) **POLYACETAL MOLDED ARTICLES STABILIZED AGAINST DISCOLORATION**
GEFORMTE ARTIKEL AUS POLYACETAL, DIE GEGEN VERFÄRBUNG STABILISIERT SIND
ARTICLES MOULES EN POLYACETAL STABILISES AFIN D'EMPECHER LA DECOLORATION

(30) Priority: 30.04.2001 US 287926 P
(43) Date of publication of application: 31.03.2004
(73) Proprietor: Ciba Holding Inc., 4057 Basel (CH)
(72) Inventor: CHIN, Hui, Katonah, NY 10536 (US)
(74) Representative: Bielefeldt, Florian
(86) International application number: PCT/EP2002/004461
(87) International publication number: WO 2002/088240

(56) References cited:
- EP-A- 0 435 649
- EP-A- 0 619 344
- EP-A- 0 827 979
- DE-A- 19 828 797
- US-A- 5 216 052
- DATABASE WPI Section Ch, Week 199241 Derwent Publications Ltd., London, GB; Class A28, AN 1992-335432 XP002211560 & JP 04 239048 A (TORAY IND INC), 26 August 1992 (1992-08-26)

## Description

The present invention relates to polyacetal resin molded articles stabilized against color formation. More particularly, the present invention relates to polyacetal resin molded articles that comprise a synergistic mixture of (i) pentaerythritol tetrakis [3-(3,5-di-tert-butyl-4-hydroxyphenyl) propionate] and (ii) at least one compound selected from the group consisting of tris-(4-t-butyl-2,6-dimethyl-3-hydroxybenzyl) isocyanurate, ethylene-1,2-bis-(oxyethylene(3-t-butyl-4-hydroxy-5-methylhydrocinnamate)), hexamethylene-1,6-bis-(3,5-di-t-butyl-4-hydroxyhydrocinnamate) and the monoacrylate ester of 2,2'-methylenebis(6-tert-butyl-4-methylphenol), or (iii) hexamethylene-1,6-bis-(3,5-di-t-butyl-4-hydroxyhydrocinnamate) and (iv) at least one compound selected from the group consisting of ethylene-1,2-bis-(oxyethylene(3-t-butyl-4-hydroxy-5-methylhydrocinnamate)) and tris-(4-t-butyl-2,6-dimethyl-3-hydroxybenzyl) isocyanurate.

The polyacetal-molded articles of the present invention exhibit excellent thermal aging resistance, excellent initial and long-term color stability and excellent anti-mold deposit properties. The polyacetal molded articles of the present invention can be advantageously used for various applications, for example for mechanical parts which will be used under high temperature conditions for a prolonged period of time (for example, mechanical parts employed in association with automobile engines).

Polyacetal resins not only have an excellent balance of mechanical strength, chemical resistance and sliding properties, but can also be easily processed. By virtue of these advantages, polyacetal resins are widely used as engineering plastic materials for a wide variety of applications including mechanical parts, such as mechanical parts for electric and electronic equipment as well as automobiles.

When a polyacetal resin is used in the above-mentioned fields, it is necessary that the polyacetal resin have good thermal aging resistance and initial and long-term color stability. Further, from the viewpoint of improving molding productivity, it is important that the polyacetal resin have good anti-mold deposit properties.

U.S. Patent Specification No. 3,743,614 and *British Patent Specification* 1 425 771 disclose a method for improving the thermal aging resistance of a polyacetal resin by adding an aliphatic carboxylic acid metal salt.

U.S. Patent Specification No. 5,364,900 discloses polyacetal resin compositions comprising hindered phenol antioxidants and ion adsorbents.

U.S. Pat. No. 5,948,844 discloses polyacetal resin compositions comprising terminal-stabilized polyacetal resin and at least one certain aliphatic carboxylic acid metal salt.

US-A-5216052 discloses the stabilization of polyacetals with Bisbenzofuran-2-ones or combinations of Bisbenzofuran-2-ones with hindered phenolic antixodiants such as Irganox^{®} 1010 or Irganox^{®} 245.

EP-A-0619344 discloses the stabilization of polyacetal resins to which known hindered phenol type antioxidants such as Irganox^{®} 1010 are added.

JP-A-4239048 *discloses acetal polymer compositions comprising a specific phenolic antioxidant in combination with a specific amine compound. The specific hindered phenolic antioxidant is Irganox^{®} 245*.

DE-A-19828797 *discloses polyoxymethylene homo- or copolymer stabilised with sterically hindered phenols, inter alia Irganox^{®} 245,* 259 *and 1010*.

EP-A-0435649 *discloses polyoxymethylene resin compositions stabilised with sterically hindered phenols, inter alia Irganox^{®}* *245, 259 and 1010*.

It has unexpectedly been found that specific hindered phenolic antioxidant combinations are synergistic towards providing thermal aging resistance and initial and long-term color stability to polyacetal resins.

According to the present invention, there is provided a polyacetal molded article stabilized against discoloration comprising
(a) A polyacetal resin; and
(b) An effective stabilizing amount of a synergistic combination of
   (i) Pentaerythritol tetrakis [3-(3,5-di-tert-butyl-4-hydroxyphenyl) propionate]; and
   (ii) At least one compound selected from the group consisting of tris-(4-t-butyl-2,6-dimethyl-3-hydroxybenzyl) isocyanurate, ethylene-1,2-bis-(oxyethylene(3-t-butyl-4-hydroxy-5-methylhydrocinnamate)), hexamethylene-1,6-bis-(3,5-di-t-butyl-4-hydroxyhydrocinnamate) and the monoacrylate ester of 2,2'-methylenebis(6-tert-butyl-4-methylphenol); or
(c) An effective stabilizing amount of a synergistic combination of
   (iii) Hexamethylene-1,6-bis-(3,5-di-t-butyl-4-hydroxyhydrocinnamate) and
   (iv) At least one compound selected from the group consisting of ethylene-1, 2-bis-(oxyethylene (3-t-butyl-4-hydroxy-5-methylhydrocinnamate)) and tris- (4-t-butyl-2, 6-dimethyl-3-hydroxybenzyl) isocyanurate.

Pentaerythritol tetrakis [3-(3,5-di-tert-butyl-4-hydroxyphenyl) propionate], CAS # 6683-19-8, is commercially available as Irganox^{®} 1010; tris-(4-t-butyl-2, 6-dimethyl-3-hydroxybenzyl) isocyanurate, CAS #40601-76-1, is available as Irganox^{®} 3790; ethylene-1, 2-bis-(oxyethylene (3-t-butyl-4-hydroxy-5-methylhydrocinnamate)), CAS # 36443-68-2, is available as Irganox^{®} 245; hexamethylene-1, 6-bis- (3,5-di-t-butyl-4-hydroxyhydrocinnamate), CAS # 35074-77-2, is available as Irganox^{®} 259; the monoacrylate ester of 2,2'-methylenebis(6-tert-butyl-4-methylphenol), CAS # 61167-58-6, is available as Irganox^{®} 3052. IRGANOX is a trademark of Ciba Specialty Chemicals.

The polyacetal molded articles of the present invention have excellent thermal aging resistance and excellent initial and long-term color stability, so that it solves the problems which are encountered when a shaped article produced from a conventional polyacetal resin composition is used in a high-temperature atmosphere, namely, the problems of low mechanical properties (due to unsatisfactory thermal aging resistance) and poor appearance (due to unsatisfactory initial or long-term color stability). Initial color stability refers to the initial color of the extruded molded article. Long-term color stability refers to the color of the molded article after thermal exposure. In the context of this invention "discoloration" refers to unwanted initial color of the molded article (formed on extrusion) as well as unwanted color formation of the molded article in-use (formed on thermal exposure), for instance as an automobile part. The polyacetal-molded articles of the present invention are suitable used for mechanical parts, for instance mechanical parts employed in association with automobile engines.

The amount of component (b) or (c) relative to component (a) is in the range from 0.05 to 5.0% by weight, for example 0.1 to 2.0% or 0.1 to 1.0% by weight, based on the weight of component (a).

The ratio of component (i) to (ii) is from 1:9 to 9:1, for example 1:4 to 4:1, for instance 1:3 to 3:1, or 1:2 to 2:1, or 1:1. The ratio of component (iii) to (iv) is defined as for (i) to (ii).

Examples of polyacetal resins of the present invention include those obtained by a method in which an oxymethylene homopolymer consisting essentially of oxymethylene units is produced from a formaldehyde monomer or a cyclic oligomer of formaldehyde, such as formaldehyde trimer (trioxane) or a formaldehyde tetramer (tetraoxane), and those obtained by a method in which an oxymethylene-oxyalkylene copolymer, containing 0.1 to 50.0%, for example 20.0% or less by weight of oxyalkylene units having 2 to 8 carbon atoms, is produced from a mixture of the above-mentioned formaldehyde monomer or oligomer and a cyclic formal. Examples of cyclic formals as comonomers include ethylene oxide, propylene oxide, epichlorohydrine, 1,3-dioxolane 1,4-butanediol, a glycol formal and a diglycol formal. Examples of polyacetal resins include an oxymethylene-oxyalkylene copolymer comprising a branched molecular chain, and an oxymethylene-containing block copolymer, such as a block copolymer comprising more than 50.0% by weight of a polyoxymethylene (POM) block and less than 50.0% by weight of a polymer block (containing 50.0% by weight or more of recurring oxymethylene units) other than the POM block. Examples of configurations of such oxymethylene block copolymers include A-B-A and A-B configurations, wherein A represents a POM block and B represents a polymer block other than the POM block (containing 50.0% by weight or more of recurring oxymethylene units), the amount of the B block being less than 50.0% by weight of the block copolymer.

The polyacetal homopolymer and copolymer resins of the present invention with unstable termini containing hydroxyl groups may be stabilized by known methods, for example by conversion to esters, ethers, urethanes and the like. The unstable termini may also be removed by hydrolysis.

With respect to the method for producing the polyacetal resin of the present invention, there is no particular limitation. Raw material monomers are copolymerized in the presence of a catalyst to obtain a crude polyacetal resin. The polymerization may be conducted by bulk polymerization. Either of a batch wise method and a continuous method can be employed. As a batch type polymerization apparatus, a generally known reaction vessel having a stirrer can be used. As a continuous type polymerization apparatus, a self-cleaning type mixer, such as a co-kneader, a twin-screw continuous extrusion kneader or a twin-paddle type continuous mixer, can be used. The polymerization can be conducted for example from 60 to 200°C, for instance from 60 to 120°C, under atmospheric pressure.

Examples of polymerization catalysts to be used in the polymerization reaction include boron trifluoride, boron trifluoride hydrate, and coordination compounds of an oxygen- or sulfur-containing organic compound with boron trifluoride, which may be either in gaseous form or in the form of a solution thereof in a suitable organic solvent. Of the above polymerization catalysts, the coordination compounds of an oxygen- or sulfur-containing organic compound with boron trifluoride, specifically, boron trifluoride diethyl ether and boron trifluoride dibutyl ether, are specific examples. With respect to the amount of the polymerization catalyst, the catalyst is used in an amount of from 1x10⁻⁶ to 1x10⁻³ mol, for instance 5x10⁻⁶ to 1x10⁻⁴ mol per mol of the total of the trioxane and cyclic ether.

Because the obtained crude polyacetal resin contains an active polymerization catalyst, it may be necessary to deactivate the polymerization catalyst. A method of deactivating the polymerization catalyst either in water containing a basic substance or in an organic solvent containing a basic substance may be used. Further, a method of deactivating a catalyst by adding a basic substance to a crude polyacetal resin in a molten state in an extruder may be used. Examples of basic substances to be used for deactivating a polymerization catalyst include hydroxides, inorganic weak acid salts, and organic acid salts of alkali metals or alkaline earth metals. Of these, hydroxides, carbonates, phosphates, silicates, borates, formates, acetates, stearates, palmitates, propionates, oxalates and the like of lithium, sodium, potassium, magnesium, calcium, strontium and barium are specific examples. Further, ammonia and amine compounds, such as triethylamine and tributylamine, may be used as a catalyst deactivator.

In the present invention, if desired, various customary additives, which are usually incorporated in a polyacetal resin, can be used without any particular restriction. For example, at least one additive selected from the group consisting of additional antioxidants, polymers containing a formaldehyde-reactive nitrogen atom, formic acid scavengers, light stabilizers and mold release agents can be incorporated in the polyacetal molded articles. Light stabilizers are for example ultraviolet light absorbers (UVA's) and sterically hindered amines (HALS). The amount of the additives is generally from 0.1 to 5.0 parts by weight, per 100 parts by weight of the polyacetal-molded article.

Accordingly, a further subject of the present invention is a polyacetal resin molded article stabilized against discoloration comprising
(a) A polyacetal resin;
(b) An effective stabilizing amount of a synergistic combination of
   (i) Pentaerythritol tetrakis [3-(3,5-di-tert-butyl-4-hydroxyphenyl) propionate]; and
   (ii) At least one compound selected from the group consisting of tris(4-t-butyl-2,6-dimethyl-3-hydroxybenzyl) isocyanurate, ethylene-1,2-bis-(oxyethylene(3-t-butyl-4-hydroxy-5-methylhydrocinnamate)), hexamethylene-1,6-bis-(3,5-di-t-butyl-4-hydroxyhydrocinnamate) and the monoacrylate ester of 2,2'-methylenebis(6-tert-butyl-4-methylphenol); or
(c) An effective stabilizing amount of a synergistic combination of
   (iii) Hexamethylene-1,6-bis-(3,5-di-t-butyl-4-hydroxyhydrocinnamate); and
   (iv) At least one compound selected from the group consisting of ethylene-1,2-bis-(oxyethylene(3-t-butyl-4-hydroxy-5-methylhydrocinnamate)) and tris-(4-t-butyl-2,6-dimethyl-3-hydroxybenzyl) isocyanurate; and
(d) One or more additives selected from the group consisting of antioxidants, polymers containing a formaldehyde-reactive nitrogen atom, formic acid scavengers, ultraviolet light absorbers, hindered amine light stabilizers and mold release agents.

Additional antioxidants are for example hindered phenols selected from the group consisting of n-octadecyl-3-(3',5'-di-t-butyl-4'-hydroxyphenyl)-propionate, n-octadecyl-3-(3'-methyl-5'-t-butyl-4'-hydroxyphenyl)-propionate, n-tetradecyl-3-(3',5'-di-t-butyl-4'-hydroxyphenyl)-propionate,1,4-butanediol-bis-[3-(3,5-di-t-butyl-4-hydroxyphenyl)-propionate], 3,9-bis[2-{3-(3-t-butyl-4-hydroxy-5-methylphenyl)propionyloxy}-1,1-dimethylethyl]2,4,8,10-tetraoxaspiro(5,5)undecane, N,N'-bis-3-(3',5'-di-t-butyl-t-butyl-4-hydroxyphenol)propionyl hexamethylenediamine, N,N'-tetramethylenebis-3-(3'-methyl-5'-t-butyl-4hydroxyphenol)propionyldia mine, N,N'-bis-[3-(3,5-di-t-butyl-4-hydroxyphenol)propionyl]hydrazine, N-salicyloyl-N'salicylidenehydrazine, 3-(N-salicyloyl)amino-1,2,4-triazole and N,N'-bis[2-{3-(3,5-di-butyl-4-hydroxyphenyl)propionyloxy}ethyl]oxyamide.

It is contemplated that the molded polyacetal articles comprising the presently defined binary synergistic combination of antioxidants may also comprise one or both of the other antioxidants selected from the group consisting of pentaerythritol tetrakis [3-(3,5-di-tert-butyl-4-hydroxyphenyl) propionate], tris-(4-t-butyl-2,6-dimethyl-3-hydroxybenzyl) isocyanurate, ethylene-1,2-bis-(oxyethylene(3-t-butyl-4-hydroxy-5-methylhydrocinnamate)), hexamethylene-1,6-bis-(3,5-di-t-butyl-4-hydroxyhydrocinnamate) and the monoacrylate ester of 2,2'-methylenebis(6-tert-butyl-4-methylphenol).

As a polymer containing a formaldehyde-reactive nitrogen atom, a polyamide resin, such as nylon 4,6, nylon 6, nylon 6,6, nylon 6,10, nylon 6,12 and nylon 12, and a co polyamide resin, such as nylon 6/6,6/6,10 and nylon 6/6,12, can be mentioned. Further examples of polymers containing a formaldehyde-reactive nitrogen atom include a homopolymer of acrylamide or a derivative thereof, and a copolymer of acrylamide or a derivative thereof with another vinyl monomer, such as a poly-β-alanine, which is obtained by polymerizing acrylamide or a derivative thereof with another vinyl monomer in the presence of a metal alcoholate. These polymers containing a formaldehyde-reactive nitrogen atom can be used individually or in combination. When the polyacetal-molded articles contain a polymer containing a formaldehyde-reactive nitrogen atom, the polyacetal composition exhibits remarkably high retention of strength at a thermal aging resistance test in which the resin composition is heated at 150°C for 1,000 hours.

Examples of formic acid scavengers include an amino-substituted triazine compound, an addition product between an amino-substituted triazine compound and formaldehyde, and a polycondensate between an amino-substituted triazine compound and formaldehyde.

Illustrative examples of amino-substituted triazine compounds include guanamine (2,4-diamino-sym-triazine), melamine (2,4,6-triamino-sym-triazine), N-butylmelamine, N-phenylmelamine, N,N-diphenylmelamine, N,N-diallylmelamine, N,N',N"-triphenylmelamine, benzoguanamine (2,4-diamino-6-phenyl-sym-triazine), 2,4-diamino-6-methyl-sym-triazine, 2,4-diamino-6-butyl-sym-triazine, 2,4-diamino-6-benzyloxy-sym-triazine, 2,4-diamino-6-butoxy-sym-triazine, 2,4-diamino-6-cyclo-hexyl-sym-triazine, 2,4-diamino-6-chloro-sym-triazine, 2,4-diamino-6-mercapto-sym-triazine, 2,4-dioxy-6-amino-sym-triazine, 2-oxy-4,6-diamino-sym-triazine and N,N',N'-tetracyanoethylbenzoguanamine.

Examples of addition products between an amino-substituted triazine compound and formaldehyde include N-methylolmelamine, N,N'-dimethylolmelamine and N,N',N"-trimethylolmelamine.

Examples of polycondensates between an amino-substituted triazine compound and formaldehyde include a polycondensate between melamine and formaldehyde.

The above amino-substituted triazine compounds, addition products between an amino-substituted triazine compound and formaldehyde, and polycondensates between an amino-substituted triazine compound and formaldehyde can be used individually or in combination.

Examples of light stabilizers include hydroxyphenylbenzotriazole, hydroxyphenyltriazine, oxalic anilide and hydroxybenzophenone ultraviolet light absorbers (UVA's) and sterically hindered amine light stabilizers.

Light stabilizers are for example:
2-(2-Hydroxyphenyl)-2H-benzotriazoles, for example known commercial hydroxyphenyl-2H-benzotriazoles and benzotriazoles as disclosed in *United States Patent Specification Nos.* 3,004,896*;* 3,055,896*;* 3,072,585*;* 3,074,910*;* 3,189,615*;* 3,218,322*;* 3,230,194*;* 4,127,586*;* 4,226,763*;* 4,275,004*;* 4,278,589*;* 4,315,848*;* 4,347,180*;* 4,383,863*;* 4,675,352*;* 4,681,905*,* 4,853,471*;* 5,268,450*;* 5,278,314*;* 5,280,124*;* 5,319,091*;* 5,410,071*;* 5,436,349*;* 5,516,914*;* 5,554,760*;* 5,563,242*;* 5,574,166*;* 5,607,987*,* 5,977,219 *and* 6,166,218 such as 2-(2-hydroxy-5-methylphenyl)-2H-benzotriazole, 2-(3,5-di-t-butyl-2-hydroxyphenyl)-2H-benzotriazole, 2-(2-hydroxy-5-t-butylphenyl)-2H-benzotriazole, 2-(2-hydroxy-5-t-octylphenyl)-2H-benzotriazole, 5-chloro-2-(3,5-di-t-butyl-2-hydroxyphenyl)-2H-benzotriazole, 5-chloro-2-(3-t-butyl-2-hydroxy-5-methylphenyl)-2H-benzotriazole, 2-(3-sec-butyl-5-t-butyl-2-hydroxyphenyl)-2H-benzotriazole, 2-(2-hydroxy-4-octyloxyphenyl)-2H-benzotriazole, 2-(3,5-di-t-amyl-2-hydroxyphenyl)-2H-benzotriazole, 2-(3,5-bis-a-cumyl-2-hydroxyphenyl)-2H-benzotriazole, 2-(3-t-butyl-2-hydroxy-5-(2-(ω-hydroxy-octa-(ethyleneoxy)carbonyl-ethyl)-phenyl)-2H-benzotriazole, 2-(3-dodecyl-2-hydroxy-5-methylphenyl)-2H-benzotriazole, 2-(3-t-butyl-2-hydroxy-5-(2-octyloxycarbonyl)ethylphenyl)-2H-benzotriazole, dodecylated 2-(2-hydroxy-5-methylphenyl)-2H-benzotriazole, 2-(3-t-butyl-2-hydroxy-5-(2-octyloxycarbonylethyl)phenyl)-5-chloro-2H-benzotriazole, 2-(3-tert-butyl-5-(2-(2-ethylhexyloxy)-carbonylethyl)-2-hydroxyphenyl)-5-chloro-2H-benzotriazole, 2-(3-t-butyl-2-hydroxy-5-(2-methoxycarbonylethyl)phenyl)-5-chloro-2H-benzotriazole, 2-(3-t-butyl-2-hydroxy-5-(2-methoxycarbonylethyl)phenyl)-2H-benzotriazole, 2-(3-t-butyl-5-(2-(2-ethylhexyloxy)carbonylethyl)-2-hydroxyphenyl)-2H-benzotriazole, 2-(3-t-butyl-2-hydroxy-5-(2-isooctyloxycarbonylethyl)phenyl-2H-benzotriazole, 2,2'-methylene-bis(4-t-octyl-(6-2H-benzotriazol-2-yl)phenol), 2-(2-hydroxy-3-α-cumyl-5-t-octylphenyl)-2H-benzotriazole, 2-(2-hydroxy-3-t-octyl-5-α-cumylphenyl)-2H-benzotriazole, 5-fluoro-2-(2-hydroxy-3,5-di-α-cumylphenyl)-2H-benzotriazole, 5-chloro-2-(2-hydroxy-3,5-di-a-cumylphenyl)-2H-benzotriazole, 5-chloro-2-(2-hydroxy-3-α-cumyl-5-t-octylphenyl)-2H-benzotriazole, 2-(3-t-butyl-2-hydroxy-5-(2-isoocty-loxycarbonylethyl)phenyl)-5-chloro-2H-benzotriazole, 5-trifluoromethyl-2-(2-hydroxy-3-a-cumyl-5-t-octylphenyl)-2H-benzotriazole, 5-trifluoromethyl-2-(2-hydroxy-5-t-octylphenyl)-2H-benzotriazole, 5-trifluoromethyl-2-(2-hydroxy-3,5-di-t-octylphenyl)-2H-benzotriazole, methyl 3-(5-trifluoromethyl-2H-benzotriazol-2-yl)-5-t-butyl-4-hydroxyhydrocinnamate, 5-butylsulfonyl-2-(2-hydroxy-3-α-cumyl-5-t-octylphenyl)-2H-benzotriazole, 5-trifluoromethyl-2-(2-hydroxy-3-α-cumyl-5-t-butylphenyl)-2H-benzotriazole, 5-trifluoromethyl-2-(2-hydroxy-3,5-di-t-butylphenyl)-2H-benzotriazole, 5-trifluoromethyl-2-(2-hydroxy-3,5-di-α-cumylphenyl)-2H-benzotriazole, 5-butylsulfonyl-2-(2-hydroxy-3,5-di-t-butylphenyl)-2H-benzotriazole and 5-phenylsulfonyl-2-(2-hydroxy-3,5-di-t-butylphenyl)-2H-benzotriazole;
2-Hydroxybenzophenones, for example the 4-hydroxy, 4-methoxy, 4-octyloxy, 4-decyloxy, 4-dodecyloxy, 4-benzyloxy, 4,2',4'-trihydroxy and 2'-hydroxy-4,4'-dimethoxy derivatives;
Esters of substituted and unsubstituted benzoic acids, as for example 4-tert-butylphenyl salicylate, phenyl salicylate, octylphenyl salicylate, dibenzoyl resorcinol, bis(4-tert-butylbenzoyl) resorcinol, benzoyl resorcinol, 2,4-di-tert-butylphenyl 3,5-di-tert-butyl-4-hydroxybenzoate, hexadecyl 3,5-di-tert-butyl-4-hydroxybenzoate, octadecyl 3,5-di-tert-butyl-4-hydroxybenzoate; 2-methyl-4,6-di-tert-butylphenyl 3,5-di-tert-butyl-4-hydroxybenzoate;
Acrylates and malonates, for example, α-cyano-β,β-diphenylacrylic acid ethyl ester or isooctyl ester, α-carbomethoxy-cinnamic acid methyl ester, α-cyano-β-methyl-p-methoxy-cinnamic acid methyl ester or butyl ester, α-carbomethoxy-p-methoxy-cinnamic acid methyl ester, N-(β-carbomethoxy-β-cyanovinyl)-2-methyl-indoline, Sanduvor^{®} PR25, dimethyl p-methoxybenzylidenemalonate (CAS# 7443-25-6), and Sanduvor^{®} PR31, di-(1,2,2,6,6-pentamethylpiperidin-4-yl) p-methoxybenzylidenemalonate (CAS #147783-69-5);
Oxamides, for example 4,4'-dioctyloxyoxanilide, 2,2'-diethoxyoxanilide, 2,2'-dioctyloxy-5,5'-di-tert-butoxanilide, 2,2'-didodecyloxy-5,5'-di-tert-butoxanilide, 2-ethoxy-2'-ethyloxanilide, N,N'-bis(3-dimethylaminopropyl)oxamide, 2-ethoxy-5-tert-butyl-2'-ethoxanilide and its mixture with 2-ethoxy-2'-ethyl-5,4'-di-tert-butoxanilide, mixtures of o- and p-methoxy-disubstituted oxanilides and mixtures of o-and p-ethoxy-disubstituted oxanilides;
tris-Aryl-o-hydroxyphenyl-s-triazines, for example known commercial tris-aryl-o-hydroxyphenyl-s-triazines and triazines as disclosed in, WO 96/28431, EP 434608, EP 941989, GB 2,317,893, United States Patent Specification Nos. 3,843,371*;* 4,619,956*;* 4,740,542*;* 5,096,489*;* 5,106,891*;* 5,298,067*;* 5,300,414*;* 5,354,794*;* 5,461,151*;* 5,476,937*;* 5,489,503*;* 5,543,518*;* 5,556,973*;* 5,597,854*;* 5,681,955*;* 5,726,309*;* 5,942,626*;* 5,959,008*;* 5,998,116 and 6,013,704, for example 4,6-bis-(2,4-dimethylphenyl)-2-(2-hydroxy-4-octyloxyphenyl)-s-triazine, Cyasorb^{®} 1164, Cytec Corp, 4,6-bis-(2,4-dimethylphenyl)-2-(2,4-dihydroxyphenyl)-s-triazine, 2,4-bis(2,4-dihydroxyphenyl)-6-(4-chlorophenyl)-s-triazine, 2,4-bis[2-hydroxy-4-(2-hydroxyethoxy)phenyl]-6-(4-chlorophenyl)-s-triazine, 2,4-bis[2-hydroxy-4-(2-hydroxy-4-(2-hydroxyethoxy)phenyl]-6-(2,4-dimethylphenyl)-s-triazine, 2,4-bis[2-hydroxy-4-(2-hydroxyethoxy)phenyl]-6-(4-bromophenyl)-s-triazine, 2,4-bis[2-hydroxy-4-(2-acetoxyethoxy)phenyl]-6-(4-chlorophenyl)-s-triazine, 2,4-bis(2,4-dihydroxyphenyl)-6-(2,4-dimethylphenyl)-s-triazine, 2,4-bis(4-biphenylyl)-6-(2-hydroxy-4-octyloxycarbonylethylideneoxyphenyl)-s-triazine, 2-phenyl-4-[2-hydroxy-4-(3-sec-butyloxy-2-hydroxypropyloxy)phenyl]-6-[2-hydroxy-4-(3-sec-amyloxy-2-hydroxypropyloxy)phenyl]-s-triazine, 2,4-bis(2,4-dimethylphenyl)-6-[2-hydroxy-4-(3-benzyloxy-2-hydroxypropyloxy)phenyl]-s-triazine, 2,4-bis(2-hydroxy-4-n-butyloxyphenyl)-6-(2,4-di-n-butyloxyphenyl)-s-triazine, 2,4-bis(2,4-dimethylphenyl)-6-[2-hydroxy-4-(3-nonyloxy*-2-hydroxypropyloxy)-5-α-cumylphenyl]-s-triazine (* denotes a mixture of octyloxy, nonyloxy and decyloxy groups), methylenebis-{2,4-bis(2,4-dimethylphenyl)-6-[2-hydroxy-4-(3-butyloxy-2-hydroxypropoxy)phenyl]-s-triazine}, methylene bridged dimer mixture bridged in the 3:5', 5:5' and 3:3' positions in a 5:4:1 ratio, 2,4,6-tris(2-hydroxy-4-isooctyloxycarbonylisopropylideneoxyphenyl)-s-triazine, 2,4-bis(2,4-dimethylphenyl)-6-(2-hydroxy-4-hexyloxy-5-a-cumylphenyl)-s-triazine, 2-(2,4,6-trimethylphenyl)-4,6-bis[2-hydroxy-4-(3-butyloxy-2-hydroxypropyloxy)phenyl]-s-triazine, 2,4,6-tris[2-hydroxy-4-(3-sec-butyloxy-2-hydroxypropyloxy)phenyl]-s-triazine, mixture of 4,6-bis-(2,4-dimethylphenyl)-2-(2-hydroxy-4-(3-dodecyloxy-2-hydroxypropoxy)-phenyl)-s-triazine and 4,6-bis-(2,4-dimethylphenyl)-2-(2-hydroxy-4-(3-tridecyloxy-2-hydroxypropoxy)-phenyl)-s-triazine, Tinuvin^{®} 400, Ciba Specialty Chemicals Corp., 4,6-bis-(2,4-dimethylphenyl)-2-(2-hydroxy-4-(3-(2-ethylhexyloxy)-2-hydroxypropoxy)-phenyl)-s-triazine and 4,6-diphenyl-2-(4-hexyloxy-2-hydroxyphenyl)-s-triazine;
Sterically hindered amine stabilizers, for example 4-hydroxy-2,2,6,6-tetramethylpiperidine,1-allyl-4-hydroxy-2,2,6,6-tetramethylpiperidine,1-benzyl-4-hydroxy-2,2,6,6-tetramethylpiperidine, bis(2,2,6,6-tetramethyl-4-piperidyl) sebacate, bis(2,2,6,6-tetramethyl-4-piperidyl) succinate, bis(1,2,2,6,6-pentamethyl-4-piperidyl) sebacate, bis(1-octyloxy-2,2,6,6-tetramethyl-4-piperidyl) sebacate, bis(1,2,2,6,6-pentamethyl-4-piperidyl) n-butyl-3,5-di-tert-butyl-4-hydroxybenzylmalonate, the condensate of 1-(2-hydroxyethyl)-2,2,6,6-tetramethyl-4-hydroxypiperidine and succinic acid, linear or cyclic condensates of N,N'-bis(2,2,6,6-tetramethyl-4-piperidyl)hexamethylenediamine and 4-tert-octylamino-2,6-dichloro-1,3,5-triazine, tris(2,2,6,6-tetramethyl-4-piperidyl) nitrilotriacetate, tetrakis(2,2,6,6-tetramethyl-4-piperidyl)-1,2,3,4-butane-tetracarboxylate,1,1'-(1,2-ethanediyl)-bis(3,3,5,5-tetramethylpiperazinone), 4-benzoyl-2,2,6,6-tetramethylpiperidine, 4-stearyloxy-2,2,6,6-tetramethylpiperidine, bis(1,2,2,6,6-pentamethylpiperidyl)-2-n-butyl-2-(2-hydroxy-3,5-di-tert-butylbenzyl) malonate, 3-n-octyl-7,7,9,9-tetramethyl-1,3,8-triazaspiro[4.5]decan-2,4-dione, bis(1-octyloxy-2,2,6,6-tetramethylpiperidyl) sebacate, bis(1-octyloxy-2,2,6,6-tetramethylpiperidyl) succinate, linear or cyclic condensates of N,N'-bis-(2,2,6,6-tetramethyl-4-piperidyl)hexamethylenediamine and 4-morpholino-2,6-dichloro-1,3,5-triazine, the condensate of 2-chloro-4,6-bis(4-n-butylamino-2,2,6,6-tetramethylpiperidyl )-1,3,5-triazine and 1,2-bis(3-amino-propylamino)ethane, the condensate of 2-chloro-4,6-di-(4-n-butylamino-1,2,2,6,6-pentamethylpiperidyl)-1,3,5-triazine and 1,2-bis-(3-aminopropylamino)ethane, 8-acetyl-3-dodecyl-7,7,9,9-tetramethyl-1,3,8-triazaspiro[4.5]decane-2,4-dione, 3-dodecyl-1-(2,2,6,6-tetramethyl-4-piperidyl)pyrrolidin-2,5-dione, 3-dodecyl-1-(1,2,2,6,6-pentamethyl-4-piperidyl)pyrrolidine-2,5-dione, a mixture of 4-hexadecyloxy- and 4-stearyloxy-2,2,6,6-tetramethylpiperidine, a condensation product of N,N'-bis(2,2,6,6-tetramethyl-4-piperidyl)hexamethylenediamine and 4-cyclohexylamino-2,6-dichloro-1,3,5-triazine, a condensation product of 1,2-bis(3-aminopropylamino)ethane and 2,4,6-trichloro-1,3,5-triazine as well as 4-butylamino-2,2,6,6-tetramethylpiperidine (CAS Reg. No. [136504-96-6]); N-(2,2,6,6-tetramethyl-4-piperidyl)-n-dode-cylsuccinimide, N-(1,2,2,6,6-pentamethyl-4-piperidyl)-n-dodecylsuccinimide, 2-undecyl-7,7,9,9-tetramethyl-1-oxa-3,8-diaza-4-oxo-spiro[4,5]decane, a reaction product of 7,7,9,9-tetramethyl-2-cycloundecyl-1-oxa-3,8-diaza-4-oxospiro [4,5]decane and epichlorohydrine, 1,1-bis(1,2,2,6.6-pentamethyl-4-piperidyloxycarbonyl)-2-(4-methoxyphenyl)ethene, N,N'-bis-formyl-N,N'-bis(2,2,6,6-tetramethyl-4-piperidyl)hexamethylenediamine, diester of 4-methoxy-methylene-malonic acid with 1,2,2,6,6-pentamethyl-4-hydroxypiperidine, poly[methylpropyl-3-oxy-4-(2,2,6,6-tetramethyl-4-piperidyl)]-siloxane, reaction product of maleic acid anhydride-α-olefin-copolymer with 2,2,6,6-tetramethyl-4-aminopiperidine or 1,2,2,6,6-pentamethyl-4-aminopiperidine;
   The sterically hindered amine may also be one of the compounds described in GB-A-2 301 106 as component I-a), I-b), I-c), I-d), I-e), I-f), I-g), I-h), I-i), I-j), I-k) or I-l), in particular the light stabilizer 1-a-1, 1-a-2, 1-b-1, 1-c-1, 1-c-2, 1-d-1, 1-d-2, 1-d-3, 1-e-1, 1-f-1, 1-g-1, 1-g-2 or 1-k-1 listed on pages 68 to 73 of said GB-A-2301106;
   The sterically hindered amine may also be one of the compounds described in EP-A-0 782 994, for example compounds as described in Examples 1-12 or D-1 to D-5; and
Sterically hindered amines substituted on the N-atom by a hydroxy-substituted alkoxy group, for example compounds such as 1-(2-hydroxy-2-methylpropoxy)-4-octadecanoyloxy-2,2,6,6-tetramethylpiperidine,1-(2-hydroxy-2-methylpropoxy)-4-hexadecanoyloxy-2,2,6,6-tetramethylpiperidine, the reaction product of 1-oxyl-4-hydroxy-2,2,6,6-tetramethylpiperidine with a carbon radical from t-amylalcohol, 1-(2-hydroxy-2-methylpropoxy)-4-hydroxy-2,2,6,6-tetramethylpiperidine, 1-(2-hydroxy-2-methylpropoxy)-4-oxo-2,2,6,6-tetramethylpiperidine, bis(1-(2-hydroxy-2-methylpropoxy)-2,2,6,6-tetra-methylpiperidin-4-yl) sebacate, bis(1-(2-hydroxy-2-methylpropoxy)-2,2,6,6-tetramethylpiperidin-4-yl) adipate, bis(1-(2-hydroxy-2-methylpropoxy)-2,2,6,6-tetramethylpiperidin-4-yl) succinate, bis(1-(2-hydroxy-2-methylpropoxy)-2,2,6,6-tetramethylpiperidin-4-yl) glutarate and 2,4-bis{N-[1-(2-hydroxy-2-methylpropoxy)-2,2,6,6-tetramethylpiperidin-4-yl]-N-butylamino}-6-(2-hydroxyethylamino)-s-triazine.

The above-mentioned hindered amine light stabilizers can be used individually or in combination, and also be used in combination with the above-mentioned ultraviolet light absorbers.

As a mold release agent, at least one member selected from the group consisting of a fatty acid ester, a polyalkylene glycol and an amido group-containing aliphatic compound can be used. The term "fatty acid ester" mentioned herein means a fatty acid ester which is obtained from a polyhydric alcohol and a fatty acid, preferably one which is obtained by the reaction of at least one type of a saturated or unsaturated fatty acid having 10 or more carbon atoms with a polyhydric alcohol having 2 to 6 carbon atoms. Examples of polyhydric alcohols usable for producing fatty acid esters include ethylene glycol, diethylene glycol, triethylene glycol, propylene glycol, dipropylene glycol, butanediol, pentanediol, hexanediol, glycerol, diglycerol, triglycerol, threitol, erythritol, pentaerythritol, arabitol, ribitol, xylitol, sorbite, sorbitan, sorbitol and mannitol. Examples of fatty acids include capric, lauric, myristic, palmitic, stearic, 12-hydroxystearic, arachic, behenic, lignoceric, cerotic, montanic, melissic and ceroplastic acid. Examples of unsaturated aliphatic carboxylic acids include undecylenic, oleic, elaidic, cetoleic, erucic, brassidic, sorbic, linoleic, linolenic, arachidonic, propiolic and stearolic acid, natural fatty acids containing these unsaturated aliphatic carboxylic acids, and a mixture thereof. The above-mentioned fatty acids may or may not be substituted with a hydroxyl group. Of the above-mentioned fatty acid esters, a fatty acid ester that is obtained by the reaction of a fatty acid selected from the group consisting of palmitic, stearic, behenic and montanic acid, with a polyhydric alcohol selected from the group consisting of glycerol, pentaerythritol, sorbitan and sorbitol, is preferred. The above-mentioned fatty acid esters may or may not contain a hydroxyl group. For example, the fatty acid esters can be any of a monoester, a diester and a triester. Further, the fatty acid ester may contain a hydroxyl group, which is blocked with boric acid or the like. Preferred examples of fatty acid esters include glycerol monopalmitate, dipalmitate, tripalmitate, monostearate, distearate, tristearate, monobehenate, dibehenate, tribehenate, monomontanate, dimontanate and trimontanate, pentaerythritol monopalmitate, dipalmitate, tripalmitate, tetrapalmitate, monostearate, distearate, tristearate, tetrastearate, monobehenate, dibehenate, tribehenate, tetrabehanate, monomontanate, dimontanate, trimontanate and tetramontanate, sorbitan monopalmitate, dipalmitate, tripalmitate, monostearate, distearate, tristearate, monobehenate, dibehenate, tribehenate, monomontanate, dimontanate and trimontanate, sorbitol monopalmitate, dipalmitate, tripalmitate, monostearate, distearate, tristearate, monobehenate, dibehenate, tribehenate, monomontanate, dimontanate and trimontanate. As an example of a fatty acid ester containing a hydroxyl group blocked with boric acid or the like, there can be mentioned a boric acid ester of a glycerol monoester of a fatty acid (*Unexamined Japanese Patent Application Laid-Open Specification No.* 49-60762). These fatty acid ester compounds can be used individually or in combination. The polyalkylene glycol usable as a mold release agent in the present invention is, for example, one, which is represented by the following formula: 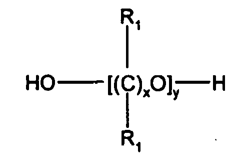 wherein each R₁ independently represents a hydrogen atom, an unsubstituted or substituted C₁₋₆alkyl group, or an unsubstituted or substituted allyl group, x is from 2 to 6, and y is from 1,000 to 20,000. The above-mentioned polyalkylene glycol can be obtained by a ring-opening polymerization of an alkylene oxide. Examples of alkylene oxides include ethylene oxide, propylene oxide, butylene oxide, epichlorohydrine, oxetane, 3,3-bis(chloromethyl)oxetane, tetrahydrofuran, 2-methyltetrahydrofuran and oxepane. These polyalkylene glycols can be used individually or in combination. An amido group-containing aliphatic compound usable as a mold release agent in the present invention is, for example, one that is represented by the following formula: 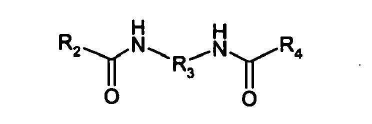 wherein each of R₂ and R₄ represents a C₁-C₃₀ alkyl group, and R₃ represents a C₁-C₃₀alkylene group.

Examples of amido group-containing aliphatic compounds include ethylenebisstearylamide, ethylenebislaurylamide, ethylenebisoleylamide and ethylenebiserucic acid amide. These amide group-containing aliphatic compounds can be used individually or in combination.

With respect to the form of the additives, the additives may be added in a powdery form or in a molten form.

With respect to the method for producing the polyacetal-molded articles of the present invention, there is no particular limitation. Generally, a polyacetal resin composition of the present invention can be obtained by melt-kneading in an extruder a polyacetal resin and the synergistic combinations of components (b) or (c) and, if desired, further optional additives. The extruder may be a single-screw extruder or may be a twin-screw extruder. The components (b) or (c) and optional further additives may be added to a reaction system during the polymerization reaction for producing a polyacetal resin.

Hindered phenol antioxidants of components (b) or (c) may be added to comonomers, such as ethylene oxide, propylene oxide, epichlorohydrine, 1,3-dioxolane and 1,4-butanediol, prior to reaction of a formaldehyde monomer or oligomer with a cyclic formaldehyde.

The individual compounds of components (i) and (ii) or (iii) and (iv) may be added to the monomers, comonomers or polyacetal either separately or together. They may be added for instance as solid particles or in the molten state. The individual compounds may be added in the form of a master batch.

The extrusion temperature is not particularly restricted, and, in general, it can be appropriately selected in the range of from 170 to 240°C.

With respect to the method for preparing the molded articles of the present invention, there is no particular limitation. The polyacetal-molded articles of the present invention can be obtained by conventionally known methods, such as extrusion molding, injection molding, compression molding, vacuum forming, blow molding or foam molding.

It is contemplated that terminal-stabilized polyacetal resins and aliphatic carboxylic acid metal salts with occluded metal compounds and surface attached metal compounds may be employed in this invention. These components are disclosed in U.S. Patent Specification. No. 5,948,844.

It is contemplated that ion adsorbents as disclosed in U.S. Patent Specification No. 5,364,900 may be employed in the resin compositions of the present invention.

The following Examples illustrate the invention in more detail. Additive structures are as defined in the specification. Abbreviations: min: minute(s); rpm: rotations per minute; h: hour(s)

### Example 1

Polyoxymethylene copolymer pellets are blended with additives by using a Turbula mixer for 15-20 min. Total formulation size is 1000 g. The mixtures are then extruded with a 27 mm Leistritz twin-screw extruder. The extrusion is conducted under conditions such that the zone temperatures are 165, 170, 180, and 190°C, the melt temperature is 199°C, the melt pressure is 650-800 psi, and the feeder speed is 100 rpm. The resin composition obtained is pelletized by a cutter. The pelletized resin composition is dried for 3 hours in a vacuum oven (at 82°C, nitrogen bleed) prior to injection molding. BOY 50M injection molder is employed with zone temperatures of 182, 188, 193°C, nozzle temperature of 199°C, mold temperature of 90°C, to obtain plaque specimen of 2" x 2" x 0.06". These specimens are then placed in Blue M circulating air oven to be aging at 130 and 140°C. Color measurement is done on these oven aged specimens by using a DCI SF600 spectrophotometer. Yellowness Index (YI) is reported in the following tables. Total levels of additives are 0.5% by weight based on the overall formulation. The results are compiled in Tables 1 - 7:

**Table 1**

| **POM Plaques Oven Aged At 130°C** | | | | | |
|---|---|---|---|---|---|
| **Additive** | **Initial** | **Days** | | | |
| | | **1** | **2** | **3** | **7** |
| A (IRGANOX 1010) | 30.1 | 31.6 | 33.0 | 34.4 | 40.1 |
| B (IRGANOX 3790) | 24.8 | 28.5 | 30.2 | 31.8 | 38.0 |
| 1:1 Ratio of A, B (expected) | 20.5 (27.4) | 24.3(30.1) | 26.3 (31.6) | 28.5 (33.1) | 36.3 (39.1) |
| 1:1 Ratio of A,B (expected) | 13.9 (25.9) | 21.1 (29.1) | 23.7 (30.8) | 26.2 (32.2) | 35.7 (38.4) |

**Table 2**

| **POM Plaques Oven Aged At 140°C** | | | | | |
|---|---|---|---|---|---|
| **Additive** | **Initial** | **Days** | | | |
| | | **1** | **2** | **3** | **7** |
| A (IRGANOX 1010) | 30.0 | 31.4 | 36.8 | 45.4 | 56.4 |
| B (IRGANOX 3790) | 25.0 | 28.6 | 33.6 | 41.8 | 56.1 |
| 1:1 Ratio of A, B (expected) | 20.5 (27.5) | 24.3 (30.0) | 30.7 (35.2) | 42.3 (43.6) | 55.5 (56.2) |
| 1:1 Ratio of A,B (expected) | 14.0 (26.0) | 20.7 (29.2) | 27.8 (34.2) | 38.6 (42.5) | 54.5 (56.2) |

**Table 3**

| **POM Plaques Oven Aged At 130°C** | | | | | |
|---|---|---|---|---|---|
| **Additive** | **Initial** | **Days** | | | |
| | | **1** | **2** | **3** | **7** |
| A (IRGANOX 1010) | 13.1 | 16.4 | 17.8 | 19.7 | 27.7 |
| B (IRGANOX 3790) | 14.6 | 19.8 | 22.8 | 27.2 | 45.8 |
| 1:1 Ratio of A,B (expected) | 11.1(13.8) | 14.2 (18.1) | 15.5 (20.3) | 17.5 (23.4) | 25.5 (36.8) |
| 3:1 Ratio of A,B (expected) | 12.8 (13.5) | 16.1 (17.2) | 17.4 (19.0) | 19.3 (21.6) | 26.6 (32.2) |
| 4:1 Ratio of A,B (expected) | 12.3 (13.4) | 15.5 (17.1) | 16.8 (18.8) | 18.7 (21.2) | 26.6 (31.3) |

**Table 4**

| **POM Plaques Oven Aged At 140°C** | | | | | |
|---|---|---|---|---|---|
| **Additive** | **Initial** | **Days** | | | |
| | | **1** | **2** | **3** | **7** |
| A (IRGANOX 1010) | 13.1 | 16.3 | 20.5 | 33.2 | 48.8 |
| B (IRGANOX 3790) | 14.6 | 20.9 | 29.4 | 49.4 | 71.8 |
| 1:1 Ratio of A,B (expected) | 11.1 (13.8) | 14.0 (18.6) | 17.5 (25.0) | 29.0 (41.3) | 45.0 (60.3) |
| 3:1 Ratio of A, B (expected) | 12.9 (13.5) | 16.0 (17.4) | 19.6 (22.7) | 31.0 (37.2) | 46.1 (54.6) |
| 4:1 Ratio of A,B (expected) | 12.4 (13.4) | 15.5 (17.2) | 19.4 (22.3) | 31.2 (36.4) | 46.9 (53.4) |

It is seen that the combination of Irganox^{®} 1010 and Irganox 3790^{®} is synergistic towards preventing color formation in POM molded plaques.

**Table 5**

| **POM Plaques Oven Aged At 130°C** | | | | | |
|---|---|---|---|---|---|
| **Additive** | **Initial** | **Days** | | | |
| | | **1** | **2** | **3** | **7** |
| A (IRGANOX 1010) | 13.1 | 16.4 | 17.8 | 19.7 | 27.7 |
| B (IRGANOX 245) | 12.0 | 14.0 | 14.9 | 16.1 | 21.3 |
| C (IRGANOX 259) | 11.3 | 15.6 | 17.7 | 20.9 | 32.0 |
| 1:1 Ratio of A,B (expected) | 10.9 (12.6) | 13.4 (15.2) | 14.3 (16.4) | 15.7 (17.9) | 21.2 (24.5) |
| 1:1 Ratio of A, C (expected) | 10.7 (12.2) | 13.5 (16.0) | 14.5 (17.8) | 16.1 (20.3) | 22.2 (29.8) |

**Table 6**

| **POM Plaques Oven Aged At 140°C** | | | | | |
|---|---|---|---|---|---|
| **Additive** | **Initial** | **Days** | | | |
| | | **1** | **2** | **3** | **7** |
| A (IRGANOX 1010) | 13.1 | 16.3 | 20.5 | 33.2 | 48.8 |
| B (IRGANOX 245) | 12.1 | 13.9 | 16.0 | 24.5 | 39.1 |
| C (IRGANOX 259) | 11.4 | 14.8 | 20.3 | 38.8 | 59.2 |
| 1:1 Ratio of A, B (expected) | 11.0(12.6) | 13.3(15.1) | 16.0 (18.2) | 25.4 (28.8) | 38.9 (44.0) |
| 1:1 Ratio of A,C (expected) | 10.9 (12.2) | 13.7 (15.6) | 16.6 (20.4) | 26.7 (36.0) | 40.3 (54.0) |

It is seen that the combination of Irganox^{®} 1010 and Irganox 245^{®} or Irganox^{®} 259 is synergistic towards preventing color formation in POM molded plaques.

**Table 7**

| **POM Plaques Oven Aged At 130°C** | | | | | |
|---|---|---|---|---|---|
| **Additive** | **Initial** | **Days** | | | |
| | | **1** | **2** | 3 | **7** |
| A (IRGANOX 1010) | 13.1 | 16.4 | 17.8 | 19.7 | 27.7 |
| B (IRGANOX 3052) | 12.3 | 16.5 | 17.6 | 18.9 | 23.5 |
| 1:1 Ratio of A, B (expected) | 12.3 (12.7) | 15.7 (16.4) | 16.8 (17.7) | 18.2 (19.3) | 23.5 (25.6) |

It is seen that the combination of Irganox^{®} 1010 and Irganox 3052^{®} is synergistic towards preventing color formation in POM molded plaques.

### Example 2

Plaques are prepared as in Example 1. Initial color (YI) of the injection-molded plaques is measured on a spectrophotometer as in Example 1, Total levels of additives are 0.5 weight percent, based on the overall weight of the formulation. YI measurements are shown below.

| **Additive** | **YI** |
|---|---|
| A (IRGANOX 259) | 33.8 |
| B (IRGANOX 245) | 18.9 |
| C (IRGANOX 3790) | 24.8 |
| 1:1 Ratio of A,B (expected) | 17.9 (26.4) |
| 1:1 Ratio of A,C (expected) | 22.0 (29.3) |
| 1:1 Ratio of A,C (expected) | 22.4 (26.6) |

It is seen that the combinations of Irganox^{®} 259 with either Irganox^{®} 245 or Irganox^{®} 3790 are synergistic towards preventing color formation in POM molded articles.

## Claims

1. A polyacetal molded article stabilized against discoloration comprising
(a) A polyacetal resin; and
(b) An amount from 0.05 to 5.0% by weight, based on the weight of component (a), of a combination of
(i) Pentaerythritol tetrakis [3-(3,5-di-tert-butyl-4-hydroxyphenyl) propionate]; and
(ii) At least one compound selected from the group consisting of tris-(4-t-butyl-2,6-dimethyl-3-hydroxybenzyl) isocyanurate, ethylene-1,2-bis-(oxyethylene(3-t-butyl-4-hydroxy-5-methylhydrocinnamate)), hexamethylene-1,6-bis-(3,5-di-t-butyl-4-hydroxyhydrocinnamate) and the monoacrylate ester of 2,2'-methylenebis(6-tert-butyl-4-methylphenol);
in which the ratio (i):(ii) is from 1:9 to 9:1; or
(c) An amount from 0.05 to 5.0% by weight, based on the weight of component (a), of a combination of
(iii) Hexamethylene-1,6-bis-(3,5-di-t-butyl-4-hydroxyhydrocinnamate) and
(iv) At least one compound selected from the group consisting of ethylene-1,2-bis-(oxyethylene (3-t-butyl-4-hydroxy-5-methylhydrocinnamate)) and tris- (4-t-butyl-2, 6-dimethyl-3-hydroxybenzyl) isocyanurate;
in which the ratio (iii):(iv) is from 1:9 to 9:1.

2. A polyacetal molded article according to claim 1 in which components (b) or (c) are present from 0.1 to 2.0% by weight, based on the weight of component (a).

3. A polyacetal molded article according to claim 1 in which the polyacetal resin is an oxymethylene homopolymer or an oxymethylene-oxyalkylene copolymer.

4. A polyacetal molded article according to claim 1 further comprising one or more additives selected from the group consisting of additional antioxidants, polymers containing a formaldehyde-reactive nitrogen atom, formic acid scavengers, ultraviolet light absorbers, hindered amine light stabilizers and mold release agents.

5. A polyacetal molded article according to claim 4 comprising one or more additives selected from the group consisting of hydroxyphenylbenzotriazoles, hydroxyphenyltriazines and hindered amine light stabilizers.

6. A polyacetal molded article according to claim 1 in which the ratio (i):(ii) or (iii):(iv) is from 1:4 to 4:1.

7. A polyacetal molded article according to claim 1 in which the ratio (i):(ii) or (iii):(iv) is 1:1.

8. A polyacetal molded article according to claim 1, which comprises
(i) Pentaerythritol tetrakis [3-(3,5-di-tert-butyl-4-hydroxyphenyl) propionate] and
(ii) tris-(4-t-Butyl-2,6-dimethyl-3-hydroxybenzyl) isocyanurate.

## Patentansprüche

1. Polyacetal-Formgegenstand, stabilisiert gegen Verfärbung, umfassend
(a) ein Polyacetal-Harz; und
(b) eine Menge von 0,05 bis 5,0 Gewichtsprozent, bezogen auf das Gewicht von Komponente (a), von einer Kombination von
(i) Pentaerythrit-tetrakis-[3-(3,5-di-tert-butyl-4-hydroxyphenyl)-propionat]; und
(ii) mindestens einer Verbindung, ausgewählt aus der Gruppe, bestehend aus Tris-(4-t-butyl-2,6-dimethyl-3-hydroxybenzyl)-isocyanurat, Ethylen-1,2-bis-(oxyethylen-(3-t-butyl-4-hydroxy-5-methylhydrocinnamat)), Hexamethylen-1, 6-bis-(3,5-di-t-butyl-4-hydroxyhydrocinnamat) und dem Monoacrylatester von 2,2'-Methylen-bis-(6-tert-butyl-4-methylphenol) ;
worin das Verhältnis (1) : (ii) von 1 : 9 bis 9 : 1 ist; oder
(c) eine Menge von 0,05 bis 5,0 Gewichtsprozent, bezogen auf das Gewicht von Komponente (a), von einer Kombination von
(iii) Hexamethylen-1, 6-bis-(3,5-di-t-butyl-4-hydroxyhydrocinnamat); und
(iv) mindestens einer Verbindung, ausgewählt aus der Gruppe, bestehend aus Ethylen-1,2-bis-(oxyethylen- (3-t-butyl-4-hydroxy-5-methylhydrocinnamat)) und Tris-(4-t-butyl-2, 6-dimethyl-3-hydroxybenzyl)-isocyanurat;
worin das Verhältnis (iii) : (iv) von 1 : 9 bis 9 : 1 ist.

2. Polyacetal-Formgegenstand nach Anspruch 1, worin Komponenten (b) oder (c) von 0,1 bis 2,0 Gewichtsprozent, bezogen auf das Gewicht von Komponente (a), vorliegen.

3. Polyacetal-Formgegenstand nach Anspruch 1, worin das Polyacetal-Harz ein Oxymethylen-Homopolymer oder ein Oxymethylen-Oxyalkylen-Copolymer ist.

4. Polyacetal-Formgegenstand nach Anspruch 1, weiterhin umfassend ein oder mehrere Additive, ausgewählt aus der Gruppe, bestehend aus zusätzlichen Antioxidantien, Polymeren, die ein Formaldehyd-reaktives Stickstoffatom enthalten, Ameisensäure-Fängern, Ultraviolettlicht-Absorptionsmitteln, gehinderten Amin-Lichtstabilisatoren und Formtrennmitteln.

5. Polyacetal-Formgegenstand nach Anspruch 4, umfassend ein oder mehrere Additive, ausgewählt aus der Gruppe, bestehend aus Hydroxyphenyl-benzotriazolen, Hydroxyphenyltriazinen und gehinderten Amin-Lichtstabilisatoren.

6. Polyacetal-Formgegenstand nach Anspruch 1, worin das Verhältnis von (i) : (ii) oder (iii) : (iv) 1 : 4 bis 4 : 1 ist.

7. Polyacetal-Formgegenstand nach Anspruch 1, worin das Verhältnis (i) : (ii) oder (iii) : (iv) 1 : 1 ist.

8. Polyacetal-Formgegenstand nach Anspruch 1, der umfasst
(i) Pentaerythrit-tetrakis-[3-(3,5-di-tert-butyl-4-hydroxyphenyl)-propionat] und
(ii) Tris-(4-t-butyl-2,6-dimethyl-3-hydroxybenzyl)-isocyanurat.

## Revendications

1. Un article moulé de poly(acétal) stabilisé contre la décoloration comprenant
(a) une résine poly(acétal) ; et
(b) une quantité comprise entre 0,05 et 5,0% en poids, exprimée sur la base du poids du composant (a), d'une combinaison de :
(i) tétrakis-[3-(3,5-di-tert-butyl-4-hydroxyphényl)-propionate] de pentaérythritol ; et
(ii) au moins un composé choisi dans le groupe constitué de l'isocyanurate de tris-(4-t-butyl-2,6-diméthyl-3-hydroxybenzyle), de l'éthylène-1,2-bis-[oxyéthylène(3-t-butyl-4-hydroxy-5-méthylhydrocinnamate)], de l'hexaméthylène-1,6-bis-(3,5-di-t-butyl-4-hydroxyhydrocinnamate) et de l'ester de monoacrylate de 2,2'-méthylènebis(6-tert-butyl-4-méthylphénol) ;
le rapport (i)/(ii) est de 1/9 à 9/1 ; ou
(c) une quantité comprise entre 0,05 et 5,0% en poids, sur la base du poids du composant (a), d'une combinaison de
(iii) hexaméthylène-1,6-bis-(3,5-di-t-butyl-4-hydroxyhydrocinnamate) et
(iv) au moins un composé choisi dans le groupe constitué de l'éthylène-1,2-bis-[oxyéthylène-(3-t-butyl-4-hydroxy-5-méthylhydrocinnamate)] et de l'isocyanurate de tris-(4-t-butyl-2,6-diméthyl-3-hydroxy-benzyle) ;
dans lequel le rapport (iii)/(iv) est de 1/9 à 9/1.

2. Un article moulé de poly(acétal) selon la revendication 1, dans lequel les composants (b) ou (c) sont présents à raison de 0,1 à 2,0% en poids, sur la base du poids du composant (a).

3. Un article moulé de poly(acétal) selon la revendication 1, dans lequel la résine poly(acétal) est un homopolymère d'oxyméthylène ou un copolymère d'oxyméthylène-oxyalkylène.

4. Un article moulé de poly(acétal) selon la revendication 1, comprenant en outre un ou plusieurs additifs choisis dans le groupe constitué d'antioxydants additionnels, de polymères contenant un atome d'azote réactif vis-à-vis du formaldéhyde, de désactivants d'acide formique, d'agents absorbants de la lumière ultraviolette, de photostabilisants de type amine encombrée et d'agents de démoulage.

5. Un article moulé de poly(acétal) selon la revendication 4, comprenant un ou plusieurs additifs choisis dans le groupe constitué des hydroxyphényl-benzotriazoles, des hydroxyphényltriazines et des photostabilisants de type amine encombrée.

6. Un article moulé de poly(acétal) selon la revendication 1, dans lequel le rapport (i)/(ii) ou (iii)/(iv) est de 1/4 à 4/1.

7. Un article moulé de poly(acétal) selon la revendication 1, dans lequel le rapport (i)/(ii) ou (iii)/(iv) est de 1/1.

8. Un article moulé de poly(acétal) selon la revendication 1, qui comprend :
(i) du tétrakis-[3-(3,5-di-tert-butyl-4-hydroxyphényl)-propionate] de pentaérythritol et
(ii) de l'isocyanurate de tris-(4-t-butyl-2,6-diméthyl-3-hydroxybenzyle).
